**Europäisches Patentamt**

**European Patent Office**

**Office européen des brevets**

(19)

(11) Veröffentlichungsnummer: **0 187 353 B1**

## (12) EUROPÄISCHE PATENTSCHRIFT

(45) Veröffentlichungstag der Patentschrift: **10.04.91**

(51) Int. Cl.⁵: **B25B 23/147**

(21) Anmeldenummer: **85116352.7**

(22) Anmeldetag: **20.12.85**

(54) **Kraftschrauber mit Drehmomentbegrenzung.**

(30) Priorität: **11.01.85 DE 3500714**

(43) Veröffentlichungstag der Anmeldung:
**16.07.86 Patentblatt 86/29**

(45) Bekanntmachung des Hinweises auf die
Patenterteilung:
**10.04.91 Patentblatt 91/15**

(84) Benannte Vertragsstaaten:
**AT DE FR GB IT NL**

(56) Entgegenhaltungen:
**DE-A- 3 330 028**
**FR-A- 2 087 583**
**US-A- 3 892 146**

(73) Patentinhaber: **Kipfelsberger, Albert**
**Welfenstrasse 7**
**W-8070 Ingolstadt(DE)**

(72) Erfinder: **Der Erfinder hat auf seine Nennung
verzichtet**

(74) Vertreter: **Neubauer, Hans-Jürgen, Dipl.-Phys.**
**Fauststrasse 30**
**W-8070 Ingolstadt(DE)**

EP 0 187 353 B1

## Beschreibung

Die Erfindung betrifft einen Kraftschrauber mit Drehmomentbegrenzung gemäß dem Oberbegriff des Anspruchs 1.

Schraubverbindungen, insbesondere schwere Schraubverbindungen müssen oftmals mit einem vorgegebenen Drehmoment angezogen werden. Dazu sind eine Reihe von Vorrichtungen bekannt.

Allgemein bekannt ist ein von Hand zu betätigender Drehmomentschlüssel. Im Kopf des Drehmomentschlüssels ist üblicherweise eine federvorgespannte, einstellbare Ratsche enthalten, die nach dem Erreichen des eingestellten Drehmoments ausrastet. Die Drehmomentmessung und die Betätigung erfolgen somit über das gleiche Element. Drehmomentschlüssel haben normalerweise einen langen Hebel und können daher in engen Räumen nicht angewandt werden. Die Betätigungskräfte sind zum Teil sehr hoch, so daß der Einsatz für die Bedienperson sehr kraftaufwendig ist. Weiter sind Bedienfehler, insbesondere durch falsche Bedienung der Rückdrehsperre möglich.

Es sind Kraftschrauber mit Hydraulikmotoren bekannt. Die Drehmomentbestimmung erfolgt dabei über eine Druck- oder/ und Volumenmessung im Hydrauliksystem. Die Drehmomentfindung ist wegen des Schlupfs und Temperaturgangs des Hydraulikmotors ungenau. Die Bedienung ist aufwendig und übliche Leckagen führen zur Verschmutzung der Umgebung, der Hände und der Bekleidung der Bedienperson mit Hydrauliköl. Zusätzlich zum Kraftschrauber sind Antriebsaggregate, wie Hydraulikpumpen ect. erforderlich, so daß eine solche Anordnung praktisch nur für den stationären Betrieb geeignet ist.

Weiter sind Kraftschrauber mit pneumatischen Antrieben bekannt. Die Drehmomentmessung erfolgt hier ebenfalls über eine Druckmessung. Wegen der Kompressibilität und des Temperaturgangs ist dabei die Drehmomentfindung sehr ungenau. Zudem muß die Luft für den Pneumatikantrieb in üblicher Weise aufbereitet werden, was zu einem teuren Betrieb führt. Die Luftaufbereitung ist ebenfalls ein zusätzliches Aggregat, so daß mit dieser Anordnung ebenfalls kein mitführbares Montagegerät erreichbar ist.

Ein bekannter Kraftschrauber (EP-OS 0 042 548) verwendet zur Drehmomentermittlung ein separates, verformbares Bauelement, das koaxial die Ausgangswelle des Kraftschraubers umgibt. Dieses drehelastische Verbindungsstück wird während des Schraubvorganges mit zunehmendem Schraubmoment zunehmend tordiert und betätigt einen elastischen Schalter, wenn eine bestimmte Verformungsamplitude erreicht ist. Mit Hilfe dieses Schalters wird dann die Antriebseinrichtung abgeschaltet. Bei den nur sehr geringen Torsionswegen ist damit zu rechnen, daß eine mechanische Schalterbetätigung nur ungenau wirkt und damit die Drehmomentbestimmung ungenau ist. In jedem Falle ist aber ein zusätzliches Bauelement erforderlich, das sowohl das Gewicht als auch die Kosten des Kraftschraubers erhöht. Dies trifft auch für die weiter genannte Ausführungsform zu, bei der auf dem drehelastischen Verbindungsstück Dehnungsmeßstreifen aufgebracht sind.

Bei weiteren/bekannten Kraftscraubern (US-A-3 892 146 oder DE-PS 23 26 027) mit Drehmomentbegrenzung wird ein vorgebbares Drehmoment dadurch ermittelt, daß die an einem Lastwiderstand im Motcrkreis abfallende Spannung mit einem einstellbaren Wert einer Konstantspannungseinheit verglichen wird. Bei Übereinstimmung beider Werte wird über eine Relaissteuerung der Motorstrom unterbrochen. Der bekannte Kraftschrauber läuft somit mit hoher Drehzahl bis zu seinem Abschaltpunkt, wo der Motor plötzlich bei dem eingestellten Drehmomentwert abgeschaltet wird. Durch diese abrupte Abschaltung drehen die vorhandenen Schwungmassen noch weiter, so daß das Drehmoment am Abschaltpunkt nicht genau vorgebbar ist, sondern eine anzuziehende Schraube in Abhängigkeit der jeweiligen (unterschiedlichen) Drehzahlen noch etwas weitergedreht wird.

Aufgabe der Erfindung ist es demgegenüber, einen Kraftschrauber mit einer einfachen, genauen und preiswerten Drehmomenterfassung zu schaffen, der insgesamt auch für eine tragbare Ausführung geeignet ist.

Diese Aufgabe wird mit den Merkmalen des Anspruchs 1 gelöst.

Gemäß Anspruch 1 ist als Antriebseinheit ein Elektromotor vorgesehen, der mit einer Antriebswelle verbunden ist. Im elektrischen Lastkreis des Elektromotors liegt ein Steuerelement, das zur Steuerung der am Elektromotor anliegenden bzw. angelegten Spannung dient. Einer bestimmten am Elektromotor angelegten Spannung entspricht eine bestimmte lastabhängige Motorkennlinie auf der der Motor in diesem Fall betrieben wird. Entsprechend wird dies bei einem vorbestimmten Laststrom erreicht. Das Steuerelement ist mit einem Einstellpotentiometer verbunden, das zur Vorgabe der gewünschten am Motor anliegenden Spannung oder des Laststromes dient. Die Schaltung arbeitet somit prinzipiell unterschiedlich zu dem vorstehend beschriebenen Schaltungsprinzip (DE-PS 23 26 027), da eine bestimmte Motorbetriebsspannung bzw. Laststrom vorgegeben wird, was einem bestimmten Drehmoment des Motors bei Stillstand bzw. annäherndem Stillstand des Motors unter Last entspricht. Dabei wird die Kenntnis benutzt, daß ein unter Last stehender Gleichstrom- oder Universalmotor bei Stillstand (oder in der Nahe des Stillstands) das größte Drehmoment aufbringt, das von der zur Verfügung gestellten Spannung (bwz. dem Laststrom bei Verwendung eines Gleichstrommotors) abhängt. Ein besonderer Vorteil der erfindungsgemäßen Schaltung besteht daher darin, daß der Kraftschrauber nicht bei relativ hohen Drehzahlen plötzlich abschaltet, sondern der Elektromotor auf vorwählbaren unterschiedlichen Motorkennlinien betrieben wird, womit ein bestimmtes, zugeordnetes Drehmoment beim Stillstand (oder nur noch kleinen Drehzahlen) des Elektromotors erreicht wird. Dabei kommen die Schwungmassen praktisch zum Stillstand und beeinflussen die Drehmomenterfassung nicht mehr, so daß das vorgegebene Drehmoment sehr genau erreicht wird. Die Abschaltung des Elektromotors kann von einer Bedienperson in einer einfacheren Ausführungsform von Hand erfolgen, wenn die Ausgangswelle des Kraftschraubers praktisch zum Stillstand gekommen ist. Für eine automatische Abschaltung ist eine Stillstandserkennungseinrichtung vorgesehen, die beim Stillstand oder geringer Drehzahl des Elektromotors den Lastkreis selbsttätig unterbricht. Als Stillstandserkennungseinrichtungen können eine Reihe von bekannten Einrichtungen, wie induktive Drehzahlmessung, optische Drehzahlmessung mit Lochscheiben, etc., verwendet werden. Geringe Drehzahlen des Elektromotors sind wegen der starken Untersetzung an der Ausgangswelle fast nicht erkennbar bzw. bedeuten praktisch einen Stillstand der Ausgangswelle. Dadurch sind die Drehmomenterfassung beeinflussende Schwungmassen praktisch zum Stillstand gekommen und beeinflussen die Drehmomenterfassung nicht mehr.

Gemäß Anspruch 3 wird bei der Verwendung eines Wechselstrommotors ein Steuerelement zur Steuerung des Stromflußwinkels (Phasenanschnittsteuerung) verwendet. Das Steuerelement ist mit einem Stromflußwinkelsteller verbunden, an dem mit Hilfe eines Potentiometers ein bestimmter Stromflußwinkel und damit eine bestimmte Spannung für den Elektromotor einstellbar ist. Da die weitere Dimensionierung und die Daten des Elektromotors und des ange schlossenen Getriebes bekannt sind oder gemessen werden können, ist einem bestimmten Stromflußwinkel ein bestimmtes Drehmoment zugeordnet. Bei einer Serienfertigung streuen die Daten nur gering, so daß das Eintstellpotentiometer auch in der Serienfertigung von vornherein in Drehmomentwerten geeicht sein kann.

Bekanntlich schwanken die Amplitudenwerte der Stromnetzspannung je nach Belastung des Netzes. Diese Schwankungen entsprechen unterschiedlichen, zur Verfügung stehenden Spannungen am Wechselstrommotor, wodurch sich das gewünschte und eingestellte Drehmoment ändert und Ungenauigkeiten bei der Drehmomentbestimmung entstehen. Für einfachere Anwendungsfälle, bei denen es auf eine sehr genaue Drehmomentbestimmung nicht ankommt, führt die vorhergehende Ausführungsform zu befriedigenden Ergebnissen. Für genaue Schraubmomentwerte ist gemäß Anspruch 2 eine Netzkompensationsschaltung vorgesehen, die zur Korrektur der Drehmomente bei Netzschwankungen dient. Dazu wird die Netzspannung bzw. ein gleichgerichteter Anteil mit einer Konstantspannung aus einem Konstantspannungsgeber verglichen. Bei Abweichungen oder Schwankungen in der Netzspannung wird dem Stromflußwinkelsteller eine Korrekturspannung zugeführt, die die Einstellspannung am Potentiometer so verzieht, daß keine Drehmomentabweichungen auftreten.

Der erfindungsgemäße Kraftschrauber ist vorzugsweise als tragbare Einheit mit zusammengebautem Getriebe und Elektromotor aufgebaut. Im Betrieb wird der Kraftschrauber einfach auf die anzuziehende Schraube aufgesetzt und der bekannte Stützfuß am Gehäuse gegen ein festes Widerlager gestellt. Nachdem das gewünschte Drehmoment an der Skala des Einstellpotentiometers eingestellt wurde, wird der Elektromotor gestartet, wodurch er schnell anläuft, langsamer wird und beim Erreichen des eingestellten Drehmoments unter Last zum Stillstand kommmt. Nun kann der Lastkreis durch die Stillstandserkennungseinrichtung unterbrochen werden, wodurch sich durch Zurückdrehen des Motors Torsionsspannungen abbauen und der Kraftschrauber wieder abgenommen werden kann.

Die Abhängigkeit des Drehmoments vom eingestellten Stromflußwinkel ist nicht linear. Gemäß Anspruch 3 wird daher vorteilhaft als Einstellpotentiometer ein logarithmisches Potentiometer verwendet, wodurch die Einstellskala weitgehend linear und gut ablesbar wird.

Als Elektromotor ist besonders ein sogenannter Universalmotor geeignet. Darunter versteht man einen Kollektormotor mit Bürsten und einem Anker und mindestens einem Feld. Ein Motor dreht nach Abschalten das Lastkreises zum Abbau der Torsionsspannungen wieder zurück, so daß der Kraftschrauber (ggfs. nach weiterem eingeschalteten Linkslauf) wieder abgenommen werden kann (Anspruch 4).

Gemäß Anspruch 5 soll als Steuerelement im Lastkreis ein handelsüblicher Triac verwendet werden.

Als Stromflußwinkel-Steller wird vorzugsweise ein integriertes Bauteil mit angeschlossenem Einstellpotentiometer verwendet, das zugleich die Konstantspannung für die Netkompensationseinrichtung liefert. (Anspruch 6)

Aus Sicherheitsgründen ist es zweckmäßig nach dem Abschalten des Elektromotors den Handschalter zu blockieren. Der Elektromotor kann dann während seiner Rückdrehzeit zum Abbau der Torsionsspannungen nicht unbeabsichtigt als Fehlbedienung sofort wieder gestartet werden. Mit Anspruch 7 wird daher eine Quittiereinrichtung für den Handschalter vorgeschlagen.

Der Kraftschrauber ist nach Anspruch 8 als kompaktes, tragbares Gerät mit Rechts-Linkslauf (Anspruch 9) aufgebaut.

Anhand eines Ausführungsbeispiels wird die Erfindung mit weiteren Einzelheiten, Merkmalen und Vorteilen näher erläutert.

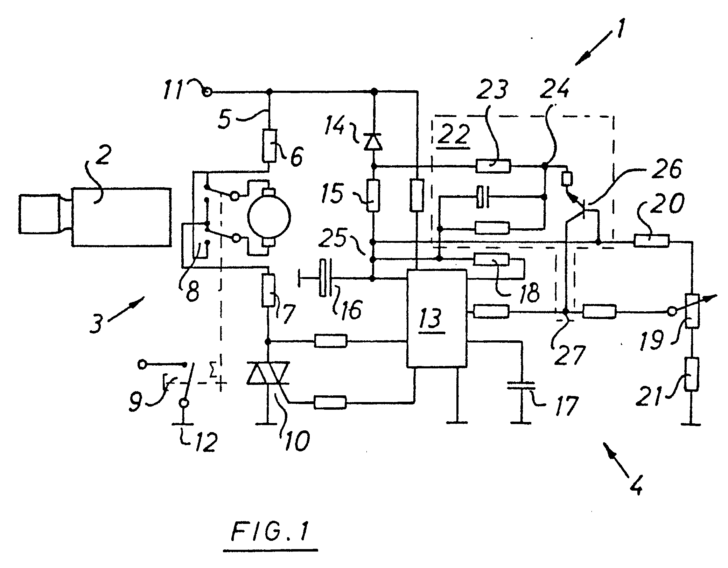

In der einzigen Figur ist schematisch ein Kraftschrauber 1 dargestellt, bestehend aus einem Planetengetriebe 2, einem Elektromotor 3 und einer Steuerschaltung 4.

Im Lastkreis 5 des Elektromotors 3 liegen zwei Feldspulen 6, 7, ein handbetätigter Rechts-Links-Umschalter 8, bzw. der Hand-Einschalter 9 und als Steuerelement ein Triac 10. Zwischen den Punkten 11 und 12 liegen 220 V Wechselspannung aus der Netzversorgung an.

Der Triac 10 ist mit einem Ansteuer-IC 13 verbunden, der über eine Diode 14 und einen Vorwiderstand 15 mit Spannung versorgt wird, wobei ein Kondensator 16 als Glättungskondensator eingesetzt ist.

Der Ansteuer-IC 13 erzeugt eine Sägezahnkurve parallel zur Netzfrequenz mit Hilfe des Kondensators 17 und des Widerstandes 18. Der Ansteuer-IC 13 ist mit einem Einstell- oder Sollwertpotentiometer 19 verbunden, mit dem dem Ansteuer-IC 13 eine Sollwertspannung zugeführt wird. Das Einstellpotentiometer hat eine (nicht dargestellte) Skala, die in Drehmomentwerten geeicht ist. Für eine Festeinstellung des Bereichs, in dem der Drehmomentsollwert eingestellt werden kann, dienen die Festwiderstände 20, 21.

Ein Vergleich zwischen dem erzeugten Sägezahn und einer vom Einstellpotentiometer 19 gelieferten Spannung wird im Ansteuer-IC 13 vorgenommen. An den Schnittpunkten wird jeweils ein Zündimpuls für den Triac 10 erzeugt und jede Halbwelle des Wechselstroms entsprechend aus- bzw. eingeschaltet.

Eine Netzkompenstatiosschaltung 22 dient zum Ausgleich von Netzspannungsschwankungen (Amplitudenschwankungen). Über den Widerstand 23 fällt Spannung ab, so daß am Punkt 24 noch etwa 20 V anliegen. Andererseits liegen am Punkt 25 15 V Konstantspannung aus dem Ansteuer-IC 13 an. Die Punkte 24 und 25 werden gegeneinander verglichen. Bei Netzspannungsschwankungen verändert sich auch die Spannung am Punkt 24. Wenn die Spannung am Punkt 24 durch eine Netzschwankung z. B. ansteigt, wird der Transistor 26 leitend und verstellt das Gleichspannungssignal am Punkt 27, das vom Einstellpotentiometer 19 geliefert wird. Dies entspricht einer Sollwertkorrektur, die wertmäßig so durchgeführt wird, daß Netzspannungsschwankungen keinen Einfluß auf das maximale Drehmoment bei Stillstand des Elektromotors 3 haben.

Zusammenfassend wird festgestellt, daß mit dem Anmeldungsgegenstand ein Kraftschrauber mit Drehmomentbegrenzung vorgeschlagen wird, bei dem die Drehmomentbestimmung einfach, preiswert und genau durchführbar ist.

**Ansprüche**

1. Kraftschrauber mit Drehmomentbegrenzung,
   mit einem Elektromotor (3) als Antriebseinheit und einem nachgeschalteten Getriebe (2) mit einer Antriebswelle und einer Ausgangswelle zum Aufstecken einer Schlüsselnuß und
   mit einem Einstellpotentiometer (19) für ein gewünschtes Drehmoment, wobei
   im elektrischen Lastkreis (5) des Elektromotors ein Steuerelement (Triac ) (10) zur Steuerung des Stromflußwinkels (Phasenanschnittsteuerung) liegt und
   das Steuerelement (Triac) mit einem Stromflußwinkel-Steller (13) verbunden ist, der das handbetätigbare Einstellpotentiometer (19) zur Vorgabe einer gewünschten Spannung entsprechend eines gewünschten Stromflußwinkels enthält und
   der Kraftschrauber eine Stillstandserkennungseinrichtung enthält, die beim Stillstand oder angenäherten Stillstand der Ausgangswelle den Lastkreis (5) unterbricht.

2. Kraftschrauber nach Anspruch 1, dadurch gekennzeichnet, daß der Stromflußwinkelsteller (13) mit einer Netzkompensationsschaltung (22) verbunden ist, der die jeweilige Netzspannung bzw. eines gleichgerichteten Anteils (24) mit einer Konstantspannung (25) aus einem Konstantspannungsgeber vergleicht und bei Abweichungen eine Spannung (27) abgibt, die dem Stromflußwinkelsteller (13) zugeführt wird.

3. Kraftschrauber nach Anspruch 1 oder 2, dadurch gekennzeichnet, daß das Einstellpotentiometer (19) ein logarithmisches Potentiometer ist.

4. Kraftschrauber nach einem der Ansprüche 1 bis 3, dadurch gekennzeichnet, daß der Elektromotor (3) ein Universalmotor ist.

5. Kraftschrauber nach einem der Ansprüche 2 bis 4, dadurch gekennzeichnet, daß das Steuerelement im Lastkreis (5) des Elektromotors (3) ein Triac (10) bzw. Thyristor ist.

6. Kraftschrauber nach einem der Ansprüche 1 bis 5, dadurch gekennzeichnet, daß der Stromflußwinkel-Steller ein integriertes Bauteil (IC 13) ist, das zugleich die Konstantspannung für die Netzkompensationsschaltung (22) liefert.

7. Kraftschrauber nach einem der Ansprüche 1 bis 6, dadurch gekennzeichnet, daß im Lastkreis (5) des Elektromotors (3) ein Handschalter (9) liegt, der eine Quittiereinrichtung enthält, die vor dem Wiedereinschalten betätigt werden muß.

8. Kraftschrauber nach einem der Ansprüche 1 bis 7, dadurch gekennzeichnet, daß der Elektromotor (3), das Getriebe (2) und die Steuerschaltung (4) in einem tragbaren, kompakten Kraftschraubergehäuse (1) zusammengebaut sind.

9. Kraftschrauber nach einem der Ansprüche 1 bis 8, dadurch gekennzeichnet, daß die Drehrichtung des Elektromotors (3) durch einen Rechts-Links-Schalter (8) änderbar ist.


**Claims**

1. A power screwing appliance with torque limitation,
   with an electric motor (3) as the drive unit and with a gear unit (2) down the line with a drive shaft and an output shaft for the insertion of a spanner socket and
   with a potentiometer (19) for the setting of a desired torque, wherein
   a control element (triac) 10 is disposed in the electric load circuit (5) of the electric motor for controlling the angle of current flow (phase shifting control) and
   the control element (triac) is connected to a setter (13) of the angle of current flow, comprising the manually actuable setting potentiometer (19) for the setting of a desired voltage in accordance with a desired angle of current flow and
   the power screwing appliance comprises a device for recognizing a state of rest, which interrupts the load circuit (5) during a state of rest or approximate state of rest of the output shaft.

2. A power screwing appliance according to claim 1, characterized in that the setter (13) of the angle of current flow is connected to a supply compensator circuit (22) that compares the respective supply voltage, or a rectified proportion (24) thereof, with a constant voltage (25) from a constant voltage generator and which, in the case of deviations, provides a voltage (27) that is passed to the setter (13) of the angle of current flow.

3. A power screwing appliance according to claim 1 or 2, characterized in that the setting potentiometer (19) is a logarithmic potentiometer.

4. A power screwing appliance according to one of claims 1 to 3, characterized in that the electric motor (3) is a universal motor.

5. A power screwing appliance according to one of claims 2 to 4, characterized in that the control element in the load circuit (5) of the electric motor (3) is a triac (10) or thyristor.

6. A power screwing appliance according to one of claims 1 to 5, characterized in that the setter of the angle of current flow is an integrated component (IC 13) that simultaneously provides the constant voltage for the supply compensator circuit (22).

7. A power screwing appliance according to one of claims 1 to 6, characterized in that a manual switch (9) is disposed in the load circuit (5) of the electric motor (3), which switch comprises a clearance device that must be actuated before the appliance is switched on again.

8. A power screwing appliance according to one of claims 1 to 7, characterized in that the electric motor (3), the gear unit (2) and the control circuit (4) are installed together in a portable compact power screwing appliance casing (1).

9. A power screwing appliance according to one of claims 1 to 8, characterized in that the direction of rotation of the electric motor (3) can be changed by a clockwise-anticlockwise switch (8).


**Revendications**

1. Outil de vissage à moteur avec limitation de couple, comportant un moteur électrique (3) en tant qu'unité d'entraînement et une transmission secondaire (2) avec un arbre menant et un arbre de sortie pour le montage d'une douille de clef, ainsi qu'un potentiomètre ajustable (19) pour le couple désiré, dans lequel un élément de commande (triac) (10) est monté dans le circuit de charge électrique (5) du moteur électrique pour le réglage du temps de conduction (commande par coupe), l'élément de commande (triac) est raccordé à un circuit de réglage de temps de conduction (13) qui contient le potentiomètre ajustable manoeuvrable à la main (19) pour pré-établir une tension désirée correspondant à un temps de conduction désiré, et l'outil de vissage à moteur contient un dispositif de détection d'arrêt, qui coupe le circuit de charge (5) lorsque l'arbre de sortie est à l'arrêt ou presque à l'arrêt.

2. Outil de vissage à moteur selon la revendication 1, caractérisé en ce que le circuit de réglage du temps de conduction (13) est raccordé à un circuit de compensation de réseau (22) qui compare la tension du réseau ou d'une fraction redressée (24) à une tension constante (25) issue d'un générateur de tension constante et, en cas d'écarts, délivre une tension (27) qui est appliquée au circuit de réglage du temps de conduction (13).

3. Outil de vissage à moteur selon la revendication 1 ou 2, caractérisé en ce que le potentiomètre ajustable (19) est un potentiomètre logarithmique.

4. Outil de vissage à moteur selon l'une quelconque des revendications 1 à 3, caractérisé en ce que le moteur électrique (3) est un moteur universel.

5. Outil de vissage à moteur selon l'une quelconque des revendications 2 à 4, caractérisé en ce que l'élément de commande dans le circuit de charge (5) du moteur électrique (3) est un triac (10) ou un thyristor.

6. Outil de visage à moteur selon l'une quelconque des revendications 1 à 5, caractérisé en ce que le circuit de réglage du temps de conduction est un composant intégré (IC 13) qui délivre en même temps la tension constante pour le circuit de compensation de réseau (22).

7. Outil de vissage à moteur selon l'une quelconque des revendications 1 à 6, caractérisé en ce qu'il est monté, dans le circuit de charge (5) du moteur électrique (3), un commutateur manuel (9) qui contient un dispositif de confirmation d'ordre qui doit être actionné avant la remise en marche.

8. Outil de vissage à moteur selon l'une quelconque des revendications 1 à 7, caractérisé en ce que le moteur électrique (3), la transmission (2) et le circuit de commande (4) sont montés dans un carter compact portable d'outil de vissage à moteur (1).

9. Outil de vissage à moteur selon l'une quelconque des revendications 1 à 8, caractérisé en ce que le sens de rotation du moteur électrique (3) peut être modifié par un commutateur droite/gauche (8).

FIG.1

EP 0 187 353 B1